# FASCICULE DE BREVET EUROPEEN

(11) **EP 3 667 250 B1**
(45) Date de publication et mention de la délivrance du brevet: **16.11.2022**
(21) Numéro de dépôt: 19214374.1
(22) Date de dépôt: 09.12.2019
(51) Int. Cl.: G01D 11/24, G01K 1/08, G01L 19/06, G01K 13/02, G01K 13/024

(54) **CRÉPINE DE PROTECTION POUR CAPTEUR**
SCHUTZSIEB FÜR EINEN SENSOR
PROTECTIVE SIEVE FOR A SENSOR

(30) Priorité: 10.12.2018 FR 1872589
(43) Date de publication de la demande: 17.06.2020
(73) Titulaire: ArianeGroup SAS, 78130 Les Mureaux (FR)
(72) Inventeur: PYRE, Alain, 27207 VERNON CEDEX (FR)
(74) Mandataire: Cabinet Beau de Loménie

(56) Documents cités:
- EP-A1- 3 147 645
- US-A- 3 718 566
- US-A- 5 546 787

## Description

### DOMAINE TECHNIQUE

Le présent exposé concerne le domaine des capteurs, notamment des capteurs configurés pour mesurer une caractéristique d'un fluide. Le présent exposé s'intéresse plus particulièrement aux crépines de protection utilisées pour de tels capteurs.

### ARRIÈRE-PLAN TECHNOLOGIQUE

On connaît des capteurs configurés pour mesurer une caractéristique d'un fluide, qui comprennent une sonde entourée par une crépine perméable au fluide. La crépine a pour fonction de protéger la sonde, notamment en cassant l'écoulement au voisinage de la sonde et en bloquant les corps étrangers qui pourraient endommager la sonde, tout en laissant le fluide baigner la sonde. Par exemple, le document EP 3 147 645 divulgue un capteur de la densité d'un gaz, comprenant une protection formée d'un réseau métallique poreux recouvert d'un polymère.

Dans certains contextes particuliers, la crépine est particulièrement sollicitée. Par exemple, dans le domaine aérospatial, il est souhaitable d'utiliser des capteurs pour instrumenter la partie arrière du lanceur, par exemple pour mesurer la température des gaz chauds au voisinage immédiat du divergent. Or, cette température peut se situer au-delà de 1800 Kelvin. Les crépines connues ne conviennent pas en raison des contraintes thermiques et mécaniques élevées générées lors d'une telle utilisation, les températures en jeu excédant généralement leur température de fusion.

Il existe donc un besoin pour un nouveau type de crépine de protection.

### PRÉSENTATION DE L'INVENTION

A cet effet, le présent exposé concerne une crépine de protection pour un capteur configuré pour mesurer une caractéristique d'un fluide, la crépine comprenant une armature poreuse recouverte d'un matériau thermiquement isolant configuré pour résister à des températures plus élevées que le matériau de l'armature, la crépine étant configurée pour être perméable au passage du fluide.

Comme évoqué précédemment, le capteur est destiné à être plongé dans un fluide pour en mesurer une caractéristique, par exemple la température, le flux thermique, la pression, les vibrations, etc. Ainsi, la crépine est également destinée à être plongée totalement ou en partie dans le fluide, sa perméabilité permettant au fluide d'atteindre la sonde. La crépine peut être agencée autour de la sonde. La crépine peut avoir une forme en cylindre à section circulaire, polygonale ou autre, une forme en dôme, en pyramide, etc.

La crépine est perméable au fluide pour lequel le capteur est conçu, par exemple perméable aux gaz. La perméabilité traduit la capacité du fluide à passer à travers la crépine. En d'autres termes, la crépine n'est pas étanche audit fluide.

L'armature est poreuse, ce qui signifie qu'elle comprend des pores. Au sens du présent exposé, les pores sont des cavités de très petite taille, par opposition à des ouvertures macroscopiques. Une porosité est dite ouverte si une majorité de pores communiquent entre eux et débouchent à la surface de l'armature. Sinon, la porosité est dite fermée, si une majorité de pores sont inaccessibles depuis l'extérieur de l'armature. On comprend que la porosité ouverte participe à la perméabilité de l'armature, tandis que la porosité fermée n'y participe pas. Ainsi, la porosité est, au sens du présent exposé, une notion différente de la perméabilité.

Le matériau isolant peut être, en lui-même, non poreux. Une fois le matériau isolant appliqué sur l'armature, la porosité globale de la crépine dépend alors de la porosité de l'armature et de l'épaisseur du revêtement de matériau isolant. Par exemple, une fois recouvertes du matériau isolant, les pores peuvent avoir une section moyenne inférieure ou égale à 10 mm², de préférence à 7 mm², de préférence encore à 5 mm².

Le matériau isolant est configuré pour résister à des températures plus élevées que le matériau de l'armature, c'est-à-dire qu'il est tel que l'armature recouverte du matériau isolant se dégrade moins, après exposition durant un temps donné à température élevée, que ne se dégraderait l'armature seule. Cela implique que le matériau isolant isole thermiquement l'armature, afin de la protéger contre les températures élevées, mais aussi que le matériau isolant tienne raisonnablement à ces températures, de façon à ne pas se dégrader trop vite, ce qui exposerait l'armature et ferait perdre le bénéfice de l'isolation. La détermination des températures élevées concernées peut être effectuée par l'homme du métier en fonction des températures auxquelles est destiné le capteur. Dans le domaine aérospatial, ces températures de fluides peuvent être supérieures ou égales à 1800 K, voire supérieures ou égales à 1900 K, voire supérieures ou égales à 2000 K, voire supérieures ou égales à 2100 K, voire encore supérieures ou égales à 2200 K.

Grâce au fait que la crépine comprend une armature poreuse, il est possible de limiter la masse de la crépine, donc les charges mécaniques dues à l'inertie de la crépine. Par suite, la crépine est moins sollicitée, ce qui permet l'utilisation de matériaux relativement peu coûteux pour à la fois reprendre les charges et résister aux températures élevées.

En outre, le matériau isolant permet d'éviter le recours à une armature en matériau métallique à haute température de fusion, ce qui serait très coûteux. Une crépine entièrement en matériaux céramiques serait satisfaisante pour la tenue en température, mais nécessiterait un procédé de fabrication onéreux pour la rendre apte à résister efficacement aux charges dynamiques liées aux efforts d'inertie et aux efforts de cisaillement et aux charges dues à la traînée de la crépine dans l'écoulement externe à haute vitesse. Enfin, la présente solution est également avantageuse par rapport à l'utilisation du carbone, qui, bien que résistant davantage que la céramique aux efforts mécaniques précités, nécessite lui aussi des procédés de fabrication complexes donc coûteux.

Dans certains modes de réalisation, la perméabilité de la crépine est assurée par des porosités ouvertes de l'armature recouverte du matériau isolant. Ainsi, la porosité de l'armature est prévue de sorte que le recouvrement par le matériau isolant ne bouche pas ou peu les porosités traversantes de l'armature. Par exemple, la taille des pores de l'armature peut être prévue suffisamment large pour qu'une majorité de pores restent ouverts après recouvrement par le matériau isolant. Ainsi, la porosité ouverte de l'armature reste globalement ouverte même après recouvrement par le matériau isolant et garantit la perméabilité de la crépine.

Dans certains modes de réalisation, alternativement ou en complément, la perméabilité de la crépine est assurée par des ouvertures traversantes de section de passage plus large que la porosité de l'armature. Dans ces modes de réalisation, la porosité de l'armature peut ne pas être suffisante pour rendre la crépine perméable, soit qu'il s'agisse d'une porosité essentiellement fermée, soit que la porosité ouverte soit bouchée par le revêtement de matériau isolant. Dans ce cas, on prévoit dans la crépine des ouvertures supplémentaires, traversantes, et dites macroscopiques au sens où leur section de passage minimale est plus large que la taille moyenne des pores de l'armature.

Dans certains modes de réalisation, la section de passage d'une ouverture ou d'une porosité ouverte est inférieure à 100 mm², de préférence à 50 mm², de préférence encore à 30 mm², de préférence encore à 20 mm². De préférence, ce critère s'applique à toutes les ouvertures et toutes les porosités ouvertes. Ainsi, la crépine offre une protection efficace pour la sonde. Cette section de passage est relative à l'armature après recouvrement par le matériau isolant. La section de passage peut, bien entendu, être adaptée en fonction de l'épaisseur de la crépine (à section de passage inchangée, une épaisseur plus grande offre une meilleure protection à la sonde) et de la grandeur physique mesurée par la sonde : une mesure de température ou de pression, par exemple, nécessite de casser l'écoulement dans l'espace entre la crépine et la sonde, tandis que pour une mesure de flux thermique, par exemple, il est préférable que la crépine perturbe peu l'écoulement.

Dans certains modes de réalisation, l'armature comprend une juxtaposition de cellules poreuses élémentaires selon une structure en réseau. Les cellules peuvent être identiques les unes aux autres et se répéter de manière périodique, de sorte que l'armature peut présenter, aux effets de bord près, une invariance par translation et/ou par rotation.

La structure en réseau est parfois appelée structure « lattice », notamment lorsqu'elle est obtenue par fabrication additive.

Dans certains modes de réalisation, l'armature est métallique. Ainsi, l'armature est apte à tenir efficacement les charges mécaniques dues aux efforts précités.

Le présent exposé vise également un capteur, de préférence un capteur de température, comprenant une sonde protégée par une crépine de protection telle que précédemment décrite. La sonde est de préférence espacée de la crépine de protection. Ainsi, l'interstice entre la sonde et la crépine définit un volume abritant une atmosphère stabilisée dans laquelle la sonde peut effectuer une mesure précise.

Le présent exposé vise également un procédé de fabrication d'une crépine de protection telle que précédemment décrite, le procédé comprenant les étapes :
- obtenir une armature poreuse ;
- recouvrir l'armature poreuse d'un matériau thermiquement isolant configuré pour résister à des températures plus élevées que le matériau de l'armature ;
- au besoin, rendre la crépine perméable au passage du fluide.

L'étape consistant à rendre la crépine perméable au passage du fluide est optionnelle et n'est utile que si la crépine n'est pas déjà perméable à l'issue des deux étapes précédentes. Par exemple, lorsque la crépine comprend des ouvertures traversantes macroscopiques pour assurer sa perméabilité au fluide, ces ouvertures peuvent être prévues lors de la fabrication de l'armature poreuse, le recouvrement par le matériau isolant n'étant pas apte à boucher ces ouvertures. Selon un autre exemple, lorsque la perméabilité de la crépine est assurée par la porosité ouverte de l'armature recouverte de matériau isolant, il n'est en général pas nécessaire de prévoir des ouvertures traversantes supplémentaires.

L'étape d'obtention de l'armature poreuse peut comprendre la fabrication d'une armature poreuse ou la simple fourniture d'une armature poreuse fabriquée préalablement.

Ainsi, dans certains modes de réalisation, l'obtention de l'armature poreuse comprend la fabrication de l'armature poreuse par fabrication additive. La fabrication additive, couramment appelée impression 3D, offre, en plus de ses avantages habituels, les avantages suivants en l'espèce : elle permet de prévoir avec précision le niveau de porosité souhaité pour l'armature ; elle permet de ménager, directement au cours de la fabrication, les ouvertures traversantes, le cas échéant ; elle résulte en un état de surface de l'armature qui est favorable au bon accrochage du matériau isolant.

La fabrication additive est en outre compatible avec une juxtaposition de cellules élémentaires comme décrit précédemment.

Dans certains modes de réalisation, l'armature poreuse est recouverte par imprégnation de l'armature dans un matériau liquide et consolidation de ce matériau liquide pour former le matériau isolant, ou par projection du matériau isolant sur l'armature.

L'étape de consolidation désigne toute étape permettant de durcir le matériau liquide pour le rendre fixe et isolant, par exemple un séchage, une polymérisation, une cuisson, etc.

### BRÈVE DESCRIPTION DES DESSINS

L'invention et ses avantages seront mieux compris à la lecture de la description détaillée qui suit, de modes de réalisation donnés à titre d'exemples non limitatifs. Cette description se réfère aux dessins annexés, sur lesquels :
[Fig. 1] La figure 1 représente schématiquement, en coupe, un capteur configuré pour mesurer une caractéristique d'un fluide selon un premier mode de réalisation.
[Fig. 2] La figure 2 est une vue en coupe selon le plan II-II de la figure 1.
[Fig. 3] La figure 3 représente schématiquement, en perspective, une cellule élémentaire selon le premier mode de réalisation.
[Fig. 4] La figure 4 illustre schématiquement l'agencement en réseau de cellules élémentaires.
[Fig. 5] La figure 5 représente schématiquement, en coupe, une crépine de protection selon un deuxième mode de réalisation.
[Fig. 6] La figure 6 est une vue en coupe selon le plan VI-VI de la figure 5.
[Fig. 7] La figure 7 représente schématiquement, en perspective, une cellule élémentaire selon le deuxième mode de réalisation.
[Fig. 8] La figure 8 illustre les étapes d'un mode de réalisation d'un procédé de fabrication d'une crépine de protection.

### DESCRIPTION DES MODES DE RÉALISATION

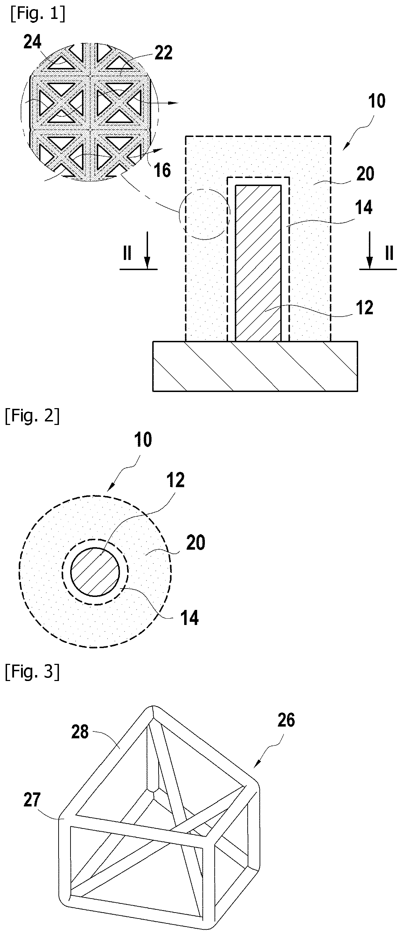

Les figures 1 et 2 illustrent, en coupe schématique, un capteur de température destiné à être monté sur la partie arrière d'un lanceur spatial pour mesurer les gaz chauds en sortie du divergent qui prolonge la chambre de combustion, par exemple sur la paroi extérieure des protections thermiques du divergent. Le capteur est donc positionné dans l'écoulement du fluide dont il doit mesurer une caractéristique. Comme indiqué précédemment, d'autres types de capteurs pourraient être conçus sur la base des principes décrits dans le présent exposé.

Le capteur 10 comprend une sonde 12 et une crépine 20. La sonde 12 peut être une sonde de température, connue en soi, adaptée à la gamme de températures à mesurer. La sonde 12 et la crépine 20 peuvent être montées sur un support commun par des moyens connus de l'homme du métier.

La crépine 20 peut être sensiblement tubulaire. Ici, la crépine 20 a une forme sensiblement cylindrique, par exemple à section circulaire, fermée à une de ses extrémités par une paroi transverse. La direction axiale correspond à la direction de l'axe du cylindre de la crépine 20, et une direction radiale est une direction perpendiculaire à cet axe et coupant cet axe. Une circonférence s'entend comme un cercle appartenant à un plan radial et dont le centre appartient à l'axe du cylindre. Une direction tangentielle ou circonférentielle est une direction tangente à une circonférence ; elle est perpendiculaire à l'axe du cylindre mais ne passe pas par l'axe.

La crépine 20 peut être prévue pour entourer la sonde 12, de sorte que la sonde 12 ne puisse être en contact avec le milieu extérieur que par l'intermédiaire de la crépine 20.

En particulier, dans ce mode de réalisation, la crépine 20 a des dimensions prévues de manière à laisser, entre la sonde 12 et la crépine 20, un interstice 14 destiné à abriter une atmosphère stabilisée du fluide dont la sonde doit mesurer la température.

L'épaisseur E de la crépine 20 peut être comprise entre 0,3 centimètres (cm) et 3 cm, de préférence entre 0,5 cm et 2 cm, de préférence entre 0,75 cm et 1,5 cm.

Dans ce mode de réalisation, la crépine 20 comprend une armature poreuse 22 recouverte d'un matériau thermiquement isolant 24. L'armature poreuse 22 peut être métallique, par exemple en acier, en alliage à base nickel, en alliage à base titane, ou autre.

Le matériau isolant 24 est configuré pour résister à des températures plus élevées que le matériau de l'armature 22. Par exemple, le matériau isolant peut être du Prosial (marque déposée) ou du Prosial2000 (marque déposée), qui sont des composés à base de sphères de silice creuses en suspension dans un élastomère de silicone. Selon d'autres exemples, le matériau isolant peut être un isolant thermique à base de liège, par exemple celui distribué sous la dénomination Norcoat (marque déposée). L'épaisseur du revêtement de matériau isolant peut être comprise entre 1 et 5 millimètres (mm).

Comme indiqué précédemment, la crépine 20 est configurée pour être perméable au passage du fluide, de sorte que le fluide pénètre dans l'interstice 14 et baigne la sonde 12. En l'occurrence, comme il ressort de l'agrandissement de la figure 1, la perméabilité de la crépine 20 est assurée par des porosités ouvertes de l'armature poreuse 22 recouverte du matériau isolant 24. En d'autres termes, dans ce mode de réalisation, le matériau isolant 24 tapisse les pores de l'armature 22 mais ne bouche pas ou peu la porosité ouverte de l'armature 22, de sorte que le fluide, dont le trajet est représenté par des flèches 16, peut passer de pore en pore et traverser la crépine 20. Ainsi, la crépine 20 est perméable au passage du fluide tout en présentant une structure potentiellement sans autre ouverture macroscopique que celle par laquelle est insérée la sonde 12.

Selon un exemple, afin de d'obtenir le niveau de porosité souhaité, l'armature 22 comprend une juxtaposition de cellules poreuses élémentaires 26 selon une structure en réseau. Une cellule poreuse élémentaire 26 est illustrée, en perspective, sur la figure 3.

La cellule élémentaire 26 comprend une pluralité de sommets 27 dont certains sont reliés par des arêtes 28. En l'occurrence, la cellule élémentaire est de type parallélépipède. Plus généralement, elle comprend huit sommets 27, chaque sommet 27 étant relié à au moins trois autres sommets 27 par des arêtes respectives 28, et à au plus quatre autres sommets 27. Les arêtes peuvent avoir une section circulaire, ou plus généralement à contour courbe, telles des barreaux, afin de limiter la perturbation de l'écoulement du fluide. La cellule élémentaire 26 est poreuse au sens où elle peut être traversée par le fluide, qui circule alors autour de et entre ses arêtes 28. La cellule élémentaire 26 pourrait avoir une autre structure que celle représentée.

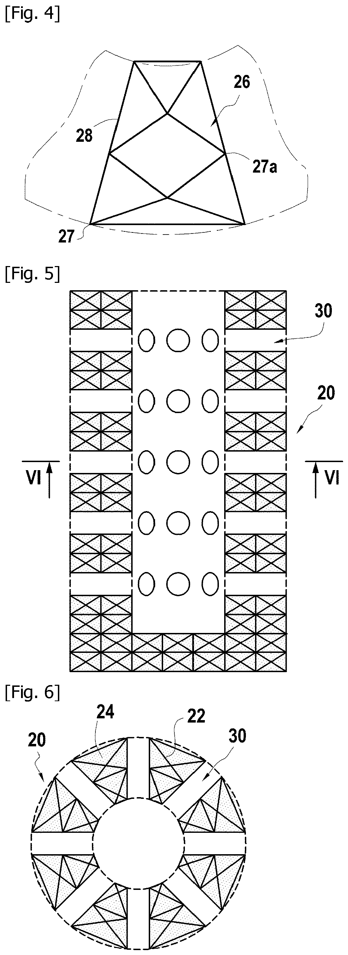

Les cellules élémentaires 26 peuvent être agencées ou juxtaposées selon une structure en réseau pour former l'armature 22. La figure 4 illustre un exemple schématique d'un tel agencement. Sur la figure 4, on voit deux cellules élémentaires 26 contiguës dans la direction radiale de l'armature 22. Comme il ressort de cette figure, les cellules élémentaires contiguës peuvent avoir des sommets 27 en commun, par exemple le sommet 27a. Les cellules élémentaires 26 peuvent être ainsi dupliquées et empilées ou juxtaposées de proche en proche dans une direction axiale, radiale ou circonférentielle de l'armature 22, ce qui peut résulter en une invariance par rotation ou par translation dans la structure de l'armature 22.

La fabrication des cellules élémentaires 26 et de l'armature poreuse 22 peut être réalisée par fabrication additive. Les structures lattice, connues en elles-mêmes dans le domaine de la fabrication additive, sont un exemple de structure en réseau au sens du présent exposé.

La porosité souhaitée pour l'armature 22 pourrait toutefois être obtenue grâce à d'autres types de structures qu'une structure en réseau, par exemple au moyen d'une mousse métallique.

Les figures 5 à 7 présentent une crépine de protection selon un deuxième mode de réalisation. Sur ces figures, les éléments correspondant ou identiques à ceux du premier mode de réalisation recevront le même signe de référence et ne seront pas décrits à nouveau.

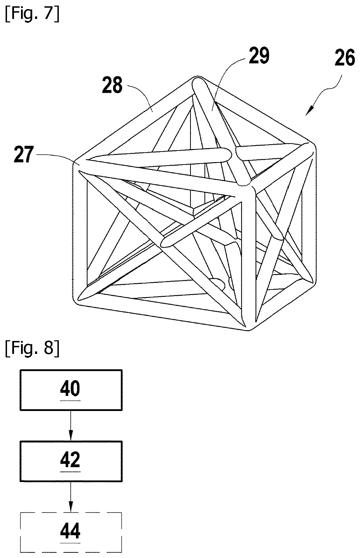

La différence principale entre le deuxième mode de réalisation et le premier mode de réalisation provient du fait que les cellules élémentaires 26 utilisées dans le deuxième mode de réalisation, dont un exemple est représenté sur la figure 7, comportent des arêtes supplémentaires 29 en plus des arêtes 28 déjà décrites. Ainsi, dans ce mode de réalisation, chaque sommet 27 est relié à au moins quatre autres sommets 27 par des arêtes respectives 28, 29, certains sommets 27 étant même reliés à cinq, six ou sept autres sommets 27. La cellule élémentaire 26 est toujours poreuse au sens où elle peut toujours être traversée par le fluide, qui circule alors autour de et entre ses arêtes 28, 29. Néanmoins, la cellule élémentaire 26 est moins poreuse que dans le premier mode de réalisation.

Par suite, lors du revêtement par le matériau isolant 24, le matériau isolant bouche au moins la majorité des porosités, de sorte que le matériau formant la crépine 20, à savoir l'armature poreuse 22 recouverte du matériau isolant 24, n'est plus, en tant que tel, perméable au fluide.

Pour pallier ce changement, comme illustré sur les figures 5 et 6, il est prévu que la perméabilité de la crépine 20 soit assurée par des ouvertures traversantes 30 de section de passage plus large que la porosité de l'armature 22. Les ouvertures traversantes sont, par opposition aux pores, macroscopiques. Leurs sections de passage étant plus larges que la porosité de l'armature 22, les ouvertures traversantes 30 peuvent être tapissées par le matériau isolant 24 sans être bouchées. Par conséquent, elles assurent la perméabilité de la crépine 20. Par exemple, dans ce mode de réalisation, les ouvertures traversantes 30 ont une section moyenne d'environ 40 mm², ou plus généralement comprise entre 10 mm² et 100 mm². Les ouvertures traversantes 30 peuvent avoir des formes ou des sections identiques ou variables d'une ouverture 30 à l'autre.

Une ouverture traversante 30 permet le passage du fluide entre l'extérieur de la crépine 20 et l'interstice 14 ; elle peut s'étendre sur toute l'épaisseur de la crépine 20. Il peut être prévu une seule ou une pluralité d'ouvertures traversantes 30, rectilignes ou non. Dans ce mode de réalisation, les ouvertures traversantes 30 sont réparties régulièrement selon les directions axiales (par exemple sur cinq rangées) et circonférentielles (par exemple sur huit colonnes) et sont traversantes dans la direction radiale.

On comprend que des ouvertures traversantes 30 peuvent être prévues pour d'autres structures d'armature 22 que celle décrite en lien avec la figure 7, par exemple lorsque l'armature 22, éventuellement recouverte de matériau isolant 24, présente une porosité essentiellement fermée, et/ou lorsque l'armature 22 recouverte de matériau isolant 24 présente une porosité ouverte qui n'est pas suffisante pour assurer de bons échanges de fluide entre l'interstice 14 et le milieu extérieur.

Aussi bien dans le deuxième mode de réalisation que dans le premier mode de réalisation, on veille toutefois à ce que la section de passage d'une ouverture traversante 30 ou d'une porosité ouverte soit suffisamment petite, par exemple inférieure à 30 mm², de façon à protéger suffisamment la sonde 12 de l'écoulement à l'extérieur de la crépine 20.

La figure 8 illustre schématiquement un procédé de fabrication d'une crépine de protection telle que la crépine 20.

A l'étape 40, on obtient une armature poreuse 22. Une telle armature poreuse 22 peut être fabriquée lors de cette étape d'obtention ou avoir été fabriquée préalablement, éventuellement par un tiers. Comme indiqué précédemment, la fabrication peut être une fabrication additive, notamment dans le cas d'une structure lattice. Le cas échéant, la présence d'ouverture traversantes 30 peut être prévue dès la fabrication de l'armature poreuse.

A l'étape 42, l'armature poreuse 22 est recouverte d'un matériau thermiquement isolant 24 configuré pour résister à des températures plus élevées que le matériau de l'armature 22. Le revêtement par le matériau isolant peut être réalisé de plusieurs façons. Selon un exemple, l'armature poreuse 22 est imprégnée par un liquide qui pénètre donc dans les pores et ouvertures de l'armature. Le liquide est ensuite consolidé, c'est-à-dire séché, cuit, polymérisé, etc., selon sa nature, afin de le durcir. Selon un autre exemple, le matériau isolant peut être projeté, à l'état de poudre solide ou à l'état liquide, sur l'armature poreuse 22. En raison du caractère directionnel des procédés de projection, une telle méthode peut notamment être utilisée dans les cas où l'armature poreuse 22 comprend des ouvertures macroscopiques 30 et une porosité suffisamment fine pour être bouchée par le matériau isolant. D'autres mises en œuvre sont encore possibles.

En tout état de cause, on veille à ce que le matériau isolant n'obture pas les ouvertures traversantes 30, au cas où elles ont été prévues.

Si la crépine 20 résultant de ces étapes est perméable au passage du fluide, il est possible de s'en tenir à ces étapes. Inversement, si nécessaire, on rend la crépine 20 perméable au passage du fluide, par exemple en ménageant des ouvertures macroscopiques 30, au cas où elles n'auraient pas été prévues précédemment. Au besoin, les ouvertures macroscopiques 30 peuvent être tapissées de matériau isolant 24 pour mieux résister aux températures élevées.

Bien que la présente description se réfère à des exemples de réalisation spécifiques, des modifications peuvent être apportées à ces exemples sans sortir de la portée générale de l'invention telle que définie par les revendications. Par exemple, bien qu'on ait décrit un mode de réalisation avec une porosité ouverte et un mode de réalisation avec une porosité bouchée par le matériau isolant, il serait possible de combiner les deux ; une crépine présenterait alors, par exemple, une ouverture macroscopique débouchant sur une région dans laquelle l'armature poreuse recouverte de matériau isolant a une porosité ouverte. Plus généralement, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Crépine de protection (20) pour un capteur (10) configuré pour mesurer une caractéristique d'un fluide, la crépine (20) comprenant une armature poreuse (22) recouverte d'un matériau thermiquement isolant (24) configuré pour résister à des températures plus élevées que le matériau de l'armature (22), la crépine (20) étant configurée pour être perméable au passage du fluide (16).

2. Crépine selon la revendication 1, dans laquelle la perméabilité de la crépine est assurée par des porosités ouvertes de l'armature (22) recouverte du matériau thermiquement isolant (24).

3. Crépine selon la revendication 1 ou 2, dans laquelle la perméabilité de la crépine est assurée par des ouvertures traversantes (30) de section de passage plus larges que la porosité de l'armature (22).

4. Crépine selon la revendication 2 ou 3, dans laquelle la section de passage d'une ouverture (30) ou d'une porosité ouverte est inférieure à 100 mm², de préférence à 50 mm², de préférence encore à 30 mm², de préférence encore à 20 mm².

5. Crépine selon l'une quelconque des revendications 1 à 4, dans laquelle l'armature (22) comprend une juxtaposition de cellules poreuses élémentaires (26) selon une structure en réseau.

6. Crépine selon l'une quelconque des revendications 1 à 5, dans laquelle l'armature (22) est métallique.

7. Capteur (10), de préférence capteur de température, comprenant une sonde (12) et une crépine de protection (20) selon l'une quelconque des revendications 1 à 6, la crépine étant configurée pour protéger la sonde.

8. Procédé de fabrication d'une crépine de protection (20) selon l'une quelconque des revendications 1 à 6, le procédé comprenant les étapes :
- obtenir (40) une armature poreuse ;
- recouvrir (42) l'armature poreuse d'un matériau thermiquement isolant configuré pour résister à des températures plus élevées que le matériau de l'armature ;
- au besoin, rendre (44) la crépine perméable au passage du fluide.

9. Procédé de fabrication selon la revendication 8, dans lequel l'armature poreuse (22) est fabriquée par fabrication additive.

10. Procédé de fabrication selon la revendication 9, dans lequel l'armature poreuse (22) est recouverte par imprégnation de l'armature (22) dans un matériau liquide et consolidation de ce matériau liquide pour former le matériau thermiquement isolant (24), ou par projection du matériau thermiquement isolant (24) sur l'armature (22).

## Patentansprüche

1. Schutzsieb (20) für einen Sensor (10), der dazu ausgebildet ist, eine Eigenschaft eines Fluids zu messen, wobei das Sieb (20) einen porösen Rahmen (22) umfasst, der mit einem wärmeisolierenden Material (24) überzogen ist, welches dazu ausgebildet ist, höheren Temperaturen als das Material des Rahmens (22) standzuhalten, wobei das Sieb (20) dazu ausgebildet ist, für den Durchgang des Fluids (16) durchlässig zu sein.

2. Sieb nach Anspruch 1, bei dem die Durchlässigkeit des Siebs durch offene Porositäten des mit dem wärmeisolierenden Material (24) überzogenen Rahmens (22) gewährleistet ist.

3. Sieb nach Anspruch 1 oder 2, bei dem die Durchlässigkeit des Siebs durch Durchgangsöffnungen (30) gewährleistet ist, deren Durchgangsquerschnitt breiter als die Porosität des Rahmens (22) ist.

4. Sieb nach Anspruch 2 oder 3, bei dem der Durchgangsquerschnitt einer Öffnung (30) oder einer offenen Porosität kleiner als 100 mm², vorzugsweise als 50 mm², weiterhin vorzugsweise als 30 mm², weiterhin vorzugsweise als 20 mm² ist.

5. Sieb nach einem der Ansprüche 1 bis 4, bei dem der Rahmen (22) eine Aneinanderreihung von porösen Einzelzellen (26) entsprechend einer Netzstruktur aufweist.

6. Sieb nach einem der Ansprüche 1 bis 5, bei dem der Rahmen (22) metallisch ist.

7. Sensor (10), vorzugsweise Temperatursensor, umfassend eine Sonde (12) und ein Schutzsieb (20) nach einem der Ansprüche 1 bis 6, wobei das Sieb dazu ausgebildet ist, die Sonde zu schützen.

8. Verfahren zum Herstellen eines Schutzsiebs (20) nach einem der Ansprüche 1 bis 6, wobei das Verfahren die Schritte umfasst:
- Erhalten (40) eines porösen Rahmens,
- Überziehen (42) des porösen Rahmens mit einem wärmeisolierenden Material, das dazu ausgebildet ist, höheren Temperaturen als das Material des Rahmens standzuhalten,
- bei Bedarf das Sieb (44) für den Durchgang des Fluids durchlässig zu machen.

9. Herstellungsverfahren nach Anspruch 8, bei dem der poröse Rahmen (22) durch additive Fertigung hergestellt wird.

10. Herstellungsverfahren nach Anspruch 9, bei dem der poröse Rahmen (22) durch Imprägnieren des Rahmens (22) in einem flüssigen Material und Verfestigen dieses flüssigen Materials zu dem wärmeisolierenden Material (24) oder durch Spritzen des wärmeisolierenden Materials auf den Rahmen überzogen wird.

## Claims

1. A protective strainer (20) for a sensor (10) configured to measure a characteristic of a fluid, the strainer (20) comprising a porous reinforcement (22) covered with a thermally insulating material (24) configured to withstand temperatures higher than the material of the reinforcement (22), the strainer (20) being configured to be permeable to the passage of the fluid (16).

2. The strainer according to claim 1, wherein the permeability of the strainer is ensured by open porosities of the reinforcement (22) covered with the thermally insulating material (24).

3. The strainer according to claim 1 or 2, wherein the permeability of the strainer is ensured by through openings (30) having a flow area wider than the porosity of the reinforcement (22).

4. The strainer according to claim 2 or 3, wherein the flow area of an opening (30) or of an open porosity is less than 100 mm², preferably than 50 mm², more preferably than 30 mm², still preferably than 20 mm².

5. The strainer according to any one of claims 1 to 4, wherein the reinforcement (22) comprises a juxtaposition of elementary porous cells (26) according to a network structure.

6. The strainer according to any one of claims 1 to 5, wherein the reinforcement (22) is metallic.

7. A sensor (10), preferably a temperature sensor, comprising a probe (12) and a protective strainer (20) according to any one of claims 1 to 6, the strainer being configured to protect the probe.

8. A method for manufacturing a protective strainer (20) according to any one of claims 1 to 6, the method comprising the steps of:
- obtaining (40) a porous reinforcement;
- covering (42) the porous reinforcement with a thermally insulating material configured to withstand higher temperatures than the material of the reinforcement;
- if necessary, making (44) the strainer permeable to the passage of the fluid.

9. The manufacturing method according to claim 8, wherein the porous reinforcement (22) is manufactured by additive manufacturing.

10. The manufacturing method according to claim 9, wherein the porous reinforcement (22) is covered by impregnating the reinforcement (22) in a liquid material and consolidating this liquid material to form the thermally insulating material (24), or by spraying the thermally insulating material (24) on the reinforcement (22).
